# EUROPÄISCHE PATENTSCHRIFT

(11) **EP 4 532 275 B1**
(45) Veröffentlichungstag und Bekanntmachung des Hinweises auf die Patenterteilung: **18.02.2026**
(21) Anmeldenummer: 23727619.1
(22) Anmeldetag: 25.05.2023
(51) Int. Cl.: B60T 11/18, B60T 13/567, B60T 13/74, F16J 15/06

(54) **HYDRAULIKBAUGRUPPE, GEHÄUSEBAUGRUPPE FÜR EINE HYDRAULIKBAUGRUPPE SOWIE VERFAHREN ZUR HERSTELLUNG EINER GEHÄUSEBAUGRUPPE**
HYDRAULIC ASSEMBLY, HOUSING ASSEMBLY FOR A HYDRAULIC ASSEMBLY, AND METHOD OF MANUFACTURING A HOUSING ASSEMBLY
ENSEMBLE HYDRAULIQUE, ENSEMBLE BOÎTIER POUR UN ENSEMBLE HYDRAULIQUE ET PROCÉDÉ DE FABRICATION D'UN ENSEMBLE BOÎTIER

(30) Priorität: 30.05.2022 DE 102022205439
(43) Veröffentlichungstag der Anmeldung: 09.04.2025
(73) Patentinhaber: Robert Bosch GmbH, 70442 Stuttgart (DE)
(72) Erfinder: JAMMES, Christian, 08172 08172 Barcelona (ES); NAGEL, Willi, 71686 Remseck/Hochdorf (DE); LOPEZ GANDUL, Alex, 08030 Barcelona (ES); VAZQUEZ LOPEZ, Raul, 08186 Llica d Amunt (ES)
(86) Internationale Anmeldenummer: PCT/EP2023/064058
(87) Internationale Veröffentlichungsnummer: WO 2023/232636

(56) Entgegenhaltungen:
- DE-A1- 102010 034 827
- DE-A1- 102020 206 337
- GB-A- 2 031 086
- GB-A- 2 147 380
- KR-A- 20050 068 152

## Beschreibung

### Technisches Gebiet

Die vorliegende Erfindung betrifft eine Hydraulikbaugruppe, insbesondere für ein hydraulisches Bremssystem, Gehäusebaugruppe für eine Hydraulikbaugruppe sowie Verfahren zur Herstellung einer Gehäusebaugruppe.

### Stand der Technik

In hydraulischen Bremssystemen von Fahrzeugen kommen üblicherweise Bremskraftverstärker, wie z.B. elektromotorische Bremskraftverstärker zum Einsatz. Das Funktionsprinzip derartiger Bremskraftverstärker beruht darauf, dass eine auf eine Betätigungseinrichtung, wie z.B. ein Pedal, aufgebrachte Kraft verstärkt wird, indem mittels eines Elektromotors über ein Getriebe eine Betätigung einer hydraulischen Druckerzeugungseinrichtung, wie z.B. einem Hauptbremszylinder, erfolgt. Hierbei erfolgt in der Regel eine lineare Verstellung einer mit der Druckerzeugungseinrichtung gekoppelten Betätigungsbaugruppe durch das Getriebe, wobei die Betätigungsbaugruppe in einem Gehäuseteil aufgenommen und an zumindest einem in dem Gehäuseteil vorgesehenen Zuganker linear verschiebbar gelagert sind.

In der DE 10 2020 206 337 A1 ist eine Hydraulikbaugruppe mit einer Gehäusebaugruppe und einem Hauptbremszylinder als Hydraulikvorrichtung beschrieben. Die Gehäusebaugruppe weise ein Gehäuseteil und einen Zuganker auf, der sich durch eine Öffnung des Gehäuseteils hindurch erstreckt. Die Hydraulikvorrichtung ist an einer Außenseite des Gehäuseteils montiert, wobei der Zuganker durch eine Bohrung in einem Flansch der Hydraulikvorrichtung ragt. Ein Dichtelement zur Abdichtung des Gehäuses ist zwischen dem Flansch und einer Außenfläche des Gehäuses vorgesehen, um die Öffnung des Gehäuseteils flüssigkeitsdicht abzudichten. An einer Innenseite des Gehäuses ist eine flache Ankermutter mit dem Zuganker verschraubt, um diesen zu fixieren. Die Ankermutter weist somit eine geringe Baulänge auf, so dass an dem Zuganker eine lange Führungsfläche zur Verfügung steht, um bei begrenzter Baulänge eine ausreichende Hublänge einer am Zuganker geführten Betätigungsbaugruppe zu realisieren. Wenn die Hydraulikvorrichtung von der Gehäusebaugruppe entfernt wird, z.B. zur Wartung oder zum Tausch, ist ein Wechsel des Dichtelements erforderlich.

Die KR 2005 0068152 A zeigt einen Bremskraftverstärker für einen mit einer Zugstange versehenen Wagen.

Die DE 102010 034827 A1 offenbart einen Unterdruckbremskraftverstärker mit einer montagefreundlichen Kammeranordnung und ein Verfahren zur Montage eines Unterdruckbremskraftverstärkers.

Die GB 2 147 380 A zeigt einen Kraftmultiplikator für Bremssysteme im Fahrzeug.

Die GB 2 031 086 A offenbart einen Bremskraftverstärker.

### Offenbarung der Erfindung

Erfindungsgemäß ist eine Gehäusebaugruppe mit den Merkmalen des Anspruchs 1, eine Hydraulikbaugruppe mit den Merkmalen des Anspruchs 9 und ein Verfahren mit den Merkmalen des Anspruchs 10 vorgesehen.

Nach einem ersten Aspekt der Erfindung umfasst eine Gehäusebaugruppe für eine Hydraulikbaugruppe, ein ein Innenvolumen zumindest teilweise umgrenzendes Gehäuseteil mit einer Durchführungsöffnung, welche sich zwischen einer dem Innenvolumen zugewandten Innenfläche und einer entgegengesetzt zu dieser orientierten Außenfläche des Gehäuseteils erstreckt, wobei ein die Durchführungsöffnung umgebender Bereich der Innenfläche eine Vertiefung ausbildet. Ferner umfasst die Gehäusebaugruppe einen Zuganker, welcher sich mit einem Innenabschnitt in dem Innenvolumen des Gehäuseteils erstreckt und welcher durch die Durchführungsöffnung hindurch ragt, so dass ein Außenabschnitt des Zugankers über die Außenfläche des Gehäuseteils vorsteht, eine Ankermutter, welche mit dem Innenabschnitt des Zugankers verschraubt ist und eine Dichtfläche aufweist, und ein Dichtelement, welches in der Vertiefung angeordnet ist und an dem Innenabschnitt des Zugankers, an dem die Durchführungsöffnung umgebenden Bereich der Innenfläche und an der Dichtfläche der Ankermutter anliegt.

Nach einem zweiten Aspekt der Erfindung ist eine Hydraulikbaugruppe, insbesondere für ein hydraulisches Bremssystem, vorgesehen. Die Hydraulikbaugruppe umfasst eine Gehäusebaugruppe nach dem ersten Aspekt der Erfindung und eine Hydraulikvorrichtung mit einem Flansch, an welchem eine Bohrung ausgebildet ist. Der Außenabschnitt des Zugankers ragt durch die Bohrung des Flansches hindurch und die Hydraulikvorrichtung ist über den Zuganker an der Gehäusebaugruppe befestigt.

Nach einem dritten Aspekt der Erfindung ist ein Verfahren zur Herstellung einer Gehäusebaugruppe dem ersten Aspekt der Erfindung vorgesehen. Das Verfahren umfasst Anordnen des Dichtelements in der Vertiefung des Gehäuseteils, ein Durchführen des Zugankers durch die Durchführungsöffnung des Gehäuseteils, ein Verschrauben der Ankermutter mit dem Zuganker und ein Kontaktieren des Dichtelements mit der Dichtfläche der Ankermutter, dem die Durchführungsöffnung umgebenden Bereich der Innenfläche und dem Innenabschnitt des Zugankers.

Eine der Erfindung zugrundeliegende Idee besteht darin, bei einer Gehäusebaugruppe für eine Hydraulikbaugruppe das Gehäusebauteil an einer Innenfläche in einem die Durchführungsöffnung umgebenden Bereich mit einer Vertiefung zu versehen und das dem Zuganker zugeordnete Dichtelement der Vertiefung anzuordnen. Auf diese Weise liegt das Dichtelement an einer Außenumfangsfläche des sich durch die Durchführungsöffnung erstreckenden Zugankers, an der Innenfläche des Gehäuseteils sowie an einer Dichtfläche der Ankermutter, welche im Innenraum des Gehäuses mit dem Zuganker verschraubt ist, an.

Durch die Ausbildung der Vertiefung an der Innenseite des Gehäuseteils wird der Bauraumbedarf des Dichtelements im Innenraum des Gehäuseteils verringert. Somit kann trotz einer Anordnung des Dichtelements im Innenraum eine Hublänge für ein am Zuganker geführtes Bauteil, z.B. ein Gleitlager einer Betätigungsbaugruppe eines Bremskraftverstärkers, verlängert werden. Gleichzeitig kann eine an der Außenseite des Gehäuseteils am Zuganker montierte Hydraulikvorrichtung ausgetauscht bzw. demontiert und erneut montiert werden, ohne dass eine Erneuerung des Dichtelements erforderlich ist. Das Dichtelement dichtet somit die Durchführungsöffnung flüssigkeitsdicht ab, insbesondere auch dann, wenn die Hydraulikvorrichtung demontiert und erneut montiert oder ausgetauscht wird. Das Dichtelement ist somit in verbesserter Weise vor Beschädigungen geschützt.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass die Durchgangsöffnung kreisförmig ausgebildet ist und die Vertiefung einen konischen Abschnitt aufweist.

Gemäß manchen Ausführungsformen kann vorgesehen sein, dass das Gehäuseteil in dem die Durchführungsöffnung umgebenden Bereich derart verformt ist, dass an der Innenfläche die Vertiefung und an der Außenfläche eine entsprechende Erhöhung ausgebildet ist. Z.B. kann das Gehäuseteil einen im Wesentlichen ebenen, insbesondere plattenförmigen Abdeckungsabschnitt aufweisen, an dem die Durchführungsöffnung ausgebildet ist, wobei der Abdeckungsabschnitt derart verformt ist, dass der die Durchführungsöffnung umgebenden Bereich an der Innenfläche die Vertiefung und an der Außenfläche einen Vorsprung bzw. eine Erhöhung bildet. Beispielsweise kann das Gehäuseteil, insbesondere der Abdeckungsabschnitt, aus einem Metallblech gebildet sein, wobei die Vertiefung und die Erhöhung durch ein Pressverformungsverfahren hergestellt sind. Optional kann das Gehäuseteil in dem die Vertiefung und die Erhöhung bildenden Bereich eine konstante Dicke aufweisen. Das Vorsehen einer Erhöhung zusätzlich zu der Vertiefung erleichtert die Herstellung und vergrößert gleichzeitig die Verwindungssteifigkeit des Gehäuseteils. Ferner kann an dem Flansch der Hydraulikvorrichtung eine die Bohrung umgebende Vertiefung ausgebildet sein, z.B. In Form einer Phase, in welcher der Vorsprung aufgenommen ist.

Gemäß manchen Ausführungsformen kann vorgesehen sein, dass die Vertiefung eine Tiefe in einem Bereich zwischen 1 mm und 4 mm aufweist. Insbesondere kann die Vertiefung eine Tiefe in einem Bereich zwischen 1,5 mm und 3,5 mm aufweisen. In diesem Bereich wird eine durchaus spürbare Verlängerung des am Zuganker zur Verfügung stehenden Hubs erzielt, wobei das Dichtelement gleichzeitig relativ groß dimensioniert werden kann, was die Dichtwirkung weiter verbessert.

Gemäß manchen Ausführungsformen kann vorgesehen sein, dass die Ankermutter eine Innenbohrung mit einem Innengewinde aufweist, welches mit einem am Innenabschnitt des Zugankers ausgebildeten Außengewinde verschraubt ist, wobei die Dichtfläche der Ankermutter sich zumindest teilweise beabstandet zu einem dem Außenabschnitt des Zugankers zugewandten Ende des Außengewindes erstreckt. Somit liegt ein Bereich der Dichtfläche der Ankermutter, in dem das Dichtelement anliegt, beabstandet zu dem Außengewinde des Zugankers. Auf diese Weise wird das Dichtelement noch besser vor Beschädigungen geschützt und die Dichtwirkung weiter verbessert.

Gemäß manchen Ausführungsformen kann vorgesehen sein, dass das Innengewinde der Ankermutter mit dem Außengewinde des Zugankers eine Überlappung in Bezug auf die Gesamtgewindelänge des Innengewindes in einem Bereich zwischen 60 Prozent und 95 Prozent aufweist. Das heißt, die Mutter wird über das Ende des Außengewindes des Zugankers hinaus geschraubt, so dass das dem Außenabschnitt des Zugankers zugewandte Ende der Mutter beabstandet zu dem Ende des Außengewindes liegt. Dadurch wird zusätzlich sichergestellt, dass das Dichtelement nicht durch das Außengewinde des Ankers beschädigt wird. Gleichzeitig wird in diesem Überlappungsbereich eine relativ große Reibfläche zwischen den Gewinden erzielt, was eine optionale Verdrehsicherung der Ankermutter erleichtert.

Gemäß manchen Ausführungsformen kann vorgesehen sein, dass die Innenbohrung in Richtung des Außenabschnitts des Zugankers über das Ende des Außengewindes hinausragt und die Dichtfläche der Ankermutter an der Innenbohrung der Ankermutter ausgebildet ist. Beispielsweise kann die Ankermutter mit einer Stirnfläche an der Innenfläche des Gehäuseteils anliegen und die in der Innenbohrung vorgesehene Dichtfläche liegt an dem Dichtelement an. Somit wird eine definierte Positionierung der Ankermutter und damit des Zugankers relativ zum Gehäuseteil erleichtert.

Gemäß manchen Ausführungsformen kann vorgesehen sein, dass die Dichtfläche der Ankermutter als Phase an der Innenbohrung der Ankermutter ausgebildet ist. Die angewinkelte Erstreckung der Dichtfläche sorgt somit dafür, dass auf das Dichtelement sowohl eine Kraft in axialer Richtung, also eine Kraft entlang des Zugankers, als auch eine Kraft in radialer Richtung, also in einer Richtung quer zum Zuganker, ausgeübt wird. Somit wird das Dichtelement in weiter verbesserter Weise gegen die Innenfläche des Gehäuseteils und gegen die Außenumfangsfläche des Zugankers gepresst.

Gemäß manchen Ausführungsformen kann vorgesehen sein, dass die Ankermutter an dem Zuganker drehgesichert ist, insbesondere durch eine Crimp-Verbindung. Entsprechend kann das Verfahren einen Drehsichern der mit dem Zuganker verschraubten Ankermutter am Zuganker umfassen. Beispielsweise kann die Ankermutter an ihrem Außenumfang mit einem Außensechskant versehen sein, von dem zumindest zwei, vorzugsweise drei Seitenflächen plastisch in radialer Richtung eingedrückt werden, um eine plastische Verformung zumindest des Innengewindes, optional auch des Außengewindes des Zugankers zu erzielen. Diese als Crimpen bezeichnete Verbindung bietet den Vorteil, dass kein zusätzliches Bauteil zur Sicherung der Mutter eingebracht werden muss und gleichzeitig eine zuverlässige Verdrehsicherung geschaffen wird. Alternativ können auch andere Drehsicherungen vorgesehen werden.

Gemäß manchen Ausführungsformen kann vorgesehen sein, dass das Dichtelement ringförmig ausgebildet ist. Beispielsweise kann das Dichtelement als O-Ring ausgebildet sein.

Gemäß manchen Ausführungsformen kann vorgesehen sein, dass die Hydraulikvorrichtung in Form einer hydraulischen Druckerzeugungseinrichtung ausgebildet ist. Beispielsweise kann die Hydraulikvorrichtung ein Tandemhauptbremszylinder, ein Plunger oder dergleichen sein.

Im Folgenden wird die Erfindung unter Bezugnahme auf die Figuren der Zeichnungen erläutert. Von den Figuren zeigen:
- Fig. 1: eine schematische Schnittansicht einer Hydraulikbaugruppe gemäß einem Ausführungsbeispiel der Erfindung;
- Fig. 2: eine perspektivische Ansicht einer Außenseite eines Gehäuseteils einer Gehäusebaugruppe gemäß einem Ausführungsbeispiel der Erfindung;
- Fig. 3: eine Detailansicht des durch den Buchstaben X gekennzeichneten Bereichs des in der Fig. 1 gezeigten Hydraulikbaugruppe; und
- Fig. 4: ein Ablaufdiagramm eines Verfahrens zur Herstellung einer Gehäusebaugruppe gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

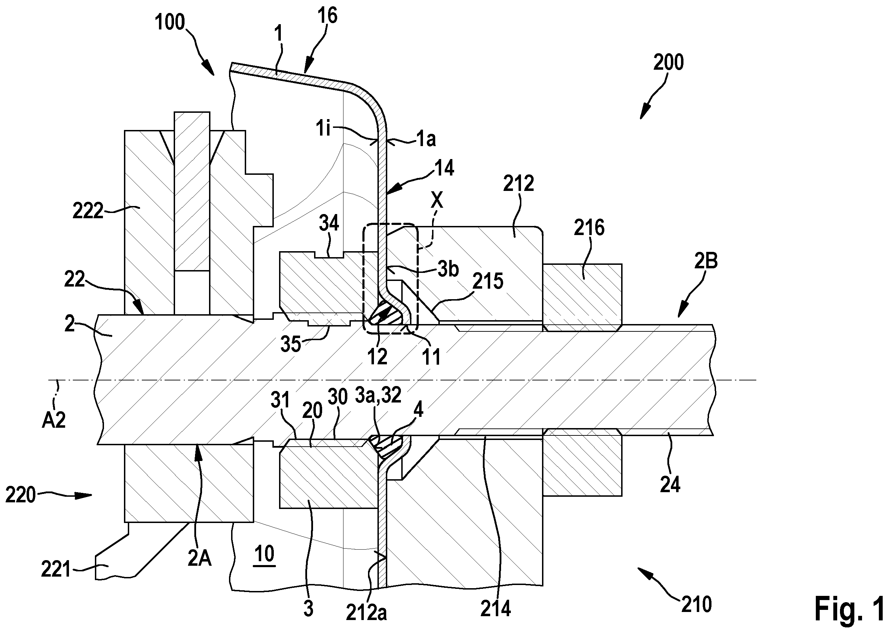

Fig. 1 zeigt schematisch eine Schnittansicht einer Hydraulikbaugruppe 200. Die Hydraulikbaugruppe 200 weist eine Gehäusebaugruppe 100 und eine Hydraulikvorrichtung 210 auf. Die Hydraulikbaugruppe 200 kann z.B. als Baugruppe in einem elektromotorischen Bremskraftverstärker für ein Fahrzeug eingesetzt werden bzw. ein solcher Bremskraftverstärker kann die Hydraulikbaugruppe 200 aufweisen.

Die Hydraulikvorrichtung 210 ist in Fig. 1 lediglich teilweise gezeigt und weist einen Flansch 212 auf, in welchem zumindest eine Bohrung 214 ausgebildet ist. Die Hydraulikvorrichtung 210 kann z.B. eine hydraulische Druckerzeugungsvorrichtung sein, wie beispielsweise ein Hauptbremszylinder, insbesondere ein Tandemhauptbremszylinder, ein Plunger oder dergleichen. Die Hydraulikvorrichtung 210 kann insbesondere mittels einer Betätigungsbaugruppe 220 mechanisch betätigbar sein. Die Betätigungsbaugruppe 220 ist in Fig. 1 ebenfalls lediglich teilweise dargestellt und kann, wie beispielhaft dargestellt, z.B. einen Verbindungsarm 221 und ein mit dem Verbindungsarm 221 verbundenes Gleitlager 222 aufweisen. Der Verbindungsarm 221 kann mittels eines Elektromotors (nicht gezeigt), der z.B. über ein Getriebe (nicht gezeigt), kinematisch an die Betätigungsbaugruppe gekoppelt ist, linear verschoben werden, um die Hydraulikvorrichtung 210 zu betätigen.

Wie in Fig. 1 gezeigt, weist die Gehäusebaugruppe 100 weist ein Gehäuseteil 1, einen Zuganker 2, eine Ankermutter 3 und ein Dichtelement 4 auf.

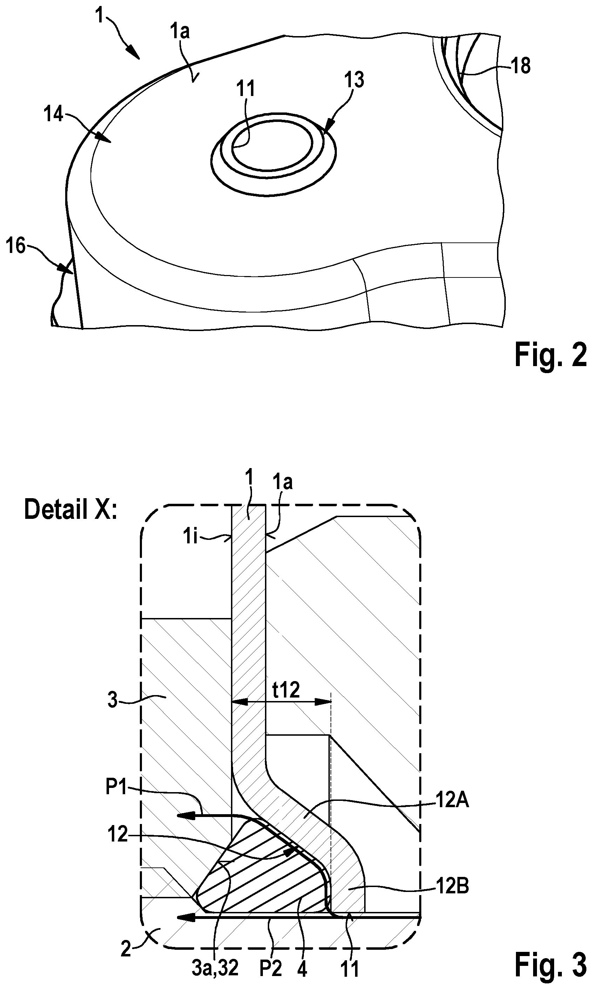

Das Gehäuseteil 1 ist in Fig. 1 lediglich teilweise dargestellt. Fig. 2 zeigt schematisch eine perspektivische Teilansicht des Gehäuseteils 1. Allgemein definiert bzw. umgrenzt das Gehäuseteil 1 ein Innenvolumen 10 zumindest teilweise. Wie in den Fign. 1 und 2 beispielhaft gezeigt, kann das Gehäuseteil 1 beispielsweise einen im Wesentlichen ebenen oder plattenförmigen Abdeckungsabschnitt 14 und einen sich quer zu diesem erstreckenden Umfangsabschnitt 16. Allgemein weist das Gehäuseteil 1 eine dem Innenvolumen 10 zugewandten bzw. eine das Innenvolumen 10 umgrenzende Innenfläche 1i und eine entgegengesetzt zu dieser orientierte Außenfläche 1a auf. Wie in den Fign. 1 und 2 ferner gezeigt ist, weist das Gehäuseteil 1 eine Durchführungsöffnung 11 auf, die sich zwischen der Innenfläche 1i und der Außenfläche 1a des Gehäuseteils 1 erstreckt und die insbesondere im Abdeckungsabschnitt 14 ausgebildet sein kann. Die Durchführungsöffnung 11 kann insbesondere einen kreisförmigen Umfang aufweisen. Ferner kann eine zentrale Anschlussöffnung 18 in dem Abdeckungsabschnitt 14 ausgebildet sein, welche sich zwischen der Innenfläche 1i und der Außenfläche 1a des Gehäuseteils 1 erstreckt und zur Aufnahme einer Betätigungsschnittstelle der Hydraulikvorrichtung 210 dient. Das Gehäuseteil 1 kann z.B. aus einem Metallmaterial, insbesondere einem Metallblech gebildet sein. Die Erfindung ist jedoch nicht hierauf beschränkt.

Wie in Fig. 1 gezeigt, bildet ein ein die Durchführungsöffnung 11 umgebender Bereich der Innenfläche 1i eine Vertiefung 12 aus. Die Durchführungsöffnung 11 ist somit am Boden oder Grund 12B einer an der Innenfläche 1i ausgebildeten Vertiefung 12 vorgesehen oder angeordnet. Wie in den Fign. 1 und 3 gezeigt, kann die Vertiefung 12 einen konischen Abschnitt 12A aufweisen. Der Öffnungswinkel des konischen Abschnitts 12A kann z.B. in einem Bereich zwischen 70 Grad und 90 Grad liegen. Weiter optional kann die Vertiefung 12 einen im Wesentlichen ebenen Bodenabschnitt 12B aufweisen, in dem die Vertiefung 12 ausgebildet ist. Wie in Fig. 2 beispielhaft gezeigt, kann das Gehäuseteil 1 in dem die Durchführungsöffnung 11 umgebenden Bereich an der Außenfläche 1a ferner eine Erhöhung 13 aufweisen. Wie in Fig. 1 schematisch gezeigt ist, kann das Gehäuseteil 1 somit derart verformt sein, dass an der Innenfläche 1i die Vertiefung 12 und an der Außenfläche 1a eine entsprechende, komplementäre Erhöhung 13 ausgebildet ist. Die Vertiefung 12 kann beispielsweise eine Tiefe t12 in einem Bereich zwischen 1 mm und 4 mm aufweisen (Fig. 3).

Der Zuganker 2 ist als stabförmiges, längliches Teil ausgebildet, das sich entlang einer Längsachse A2 erstreckt. Wie in Fig. 1 gezeigt, verläuft der Zuganker 2 im Innenvolumen 10 und erstreckt sich durch die Durchführungsöffnung 11 hindurch. Ein im Innenvolumen 10 gelegener Bereich des Zugankers 2 bildet einen Innenabschnitt 2A, ein auf einer durch die Außenfläche 1a des Gehäuseteils 1 definierter Bereich des Zugankers 2 bildet einen Außenabschnitt 2B des Zugankers 2. Der Zuganker 2 erstreckt sich somit quer zum Abdeckungsabschnitt 14. Der Außenabschnitt 2B des Zugankers 2 steht über die Außenfläche 1a des Gehäuseteils 1, insbesondre des Abdeckungsabschnitts 14 vor.

Wie in Fig. 1 gezeigt, kann der Innenabschnitt 2A des Zugankers 2 in einem der Durchgangsöffnung **11** zugewandt gelegenen Bereich ein Außengewinde 20 aufweisen. Weiterhin kann der Zuganker 2 an seinem Innenabschnitt 2A einen Führungsabschnitt 22 aufweisen, an welchem das Gleitlager 222 linear bzw. entlang der Längsachse A2 verschiebbar geführt ist. Der Außenabschnitt 2B des Zugankers 2 bildet gleichzeitig einen Endabschnitt des Zugankers und kann optional ebenfalls mit einem Außengewinde 24 versehen sein. Wie in Fig. 1 erkennbar, kann der Außenabschnitt 2B zumindest bereichsweise, insbesondere im Bereich des Gewindes 24 einen geringeren Durchmesser aufweisen als der Innenabschnitt 2A im Bereich des Gewindes 20.

Die Ankermutter 3 ist als schraubbare Hülse ausgebildet. Entsprechend weist die Ankermutter 3 eine Innenbohrung 30 mit einem Innengewinde 31 auf. Ferner weist die Ankermutter 3 eine Dichtfläche 3a auf, welche z.B. an der Innenbohrung 30 vorgesehen sein kann. Wie in den Fign. 1 und 3 beispielhaft gezeigt, kann die Dichtfläche 3a z.B. als Phase 32 an der Innenbohrung 30 der Ankermutter 3 ausgebildet sein. Die Phase 32 definiert somit eine konische Anlagefläche oder Dichtfläche 3a, welche z.B. einen Öffnungswinkel in einem Bereich zwischen 100 Grad und 140 Grad aufweisen kann. Weiterhin optional kann die Ankermutter 3 an ihrem Außenumfang mit einem Außensechskant versehen sein.

Wie in Fig. 1 schematisch gezeigt, ist die Ankermutter 3 mit dem am Innenabschnitt 2A vorgesehenen Außengewinde 20 des Zugankers 2 verschraubt. Optional kann die Ankermutter 3 an dem Zuganker 2 drehgesichert sein, insbesondere durch eine Crimp-Verbindung. Hierzu kann der Außenumfang der Ankermutter 3 zumindest eine plastische Verformung in Form einer Einkerbung 34 aufweisen, welche eine plastische Verformung 35 am Innengewinde 31 hervorruft. Wie in Fig. 1 weiterhin gezeigt, liegt die Ankermutter 3 mit einer Stirnfläche 3b an der Innenfläche 1a des Gehäuseteils 1 an.

Wie in Fig. 1 ferner gezeigt, ragt der Außenabschnitt 2B des Zugankers 2 durch die Bohrung 214 des Flanschs 212 hindurch. Zur Fixierung des Flanschs 212 am Gehäuseteil 1 kann eine Außenmutter 216 vorgesehen, welche mit dem Außengewinde 24 des Außenabschnitts 2B des Zugankers 2 verschraubt ist und den Flansch 212 zwischen sich und dem Gehäuseteil 1, insbesondere dessen Abdeckungsabschnitt 14, klemmt. Optional kann die Außenmutter 216 ebenfalls durch eine Crimp-Verbindung mit dem Zuganker 2 verdrehgesichert sein. Wie in Fig. 1 weiterhin erkennbar, kann der Flansch 212 an einer dem Gehäuseteil 1 zugewandten Anlagefläche 212a in einem die Bohrung 214 umgebenden Bereich eine Vertiefung 215 aufweisen, in welcher die optional vorgenommene Erhöhung 13 des Gehäuseteils 1 aufgenommen ist. Die Vertiefung 215 kann jedoch auch unabhängig von der Erhöhung des Gehäuseteils 1 vorgesehen sein. Das Dichtelement 4 kann insbesondere ringförmig ausgebildet sein, z.B. als O-Ring, wie in den Fign. 1 und 3 beispielhaft gezeigt. Wie in Fig. 1 dargestellt, ist das Dichtelement 4 in der Vertiefung 12 an der Innenfläche 1i des Gehäuseteils 1 angeordnet und umgibt somit die Durchführungsöffnung 11. Ferner umschließt das Dichtelement 4 den Innenabschnitt 2A des Zugankers 2 und ist in Kontakt mit der Dichtfläche 3a der Ankermutter 3. Wie insbesondere in Fig. 3 erkennbar ist, liegt das Dichtelement 4 somit in der Vertiefung 12 an der Innenfläche 1i des Gehäuseteils 1, an der Außenumfangsfläche des Zugankers 2 sowie an der Dichtfläche 3a der Ankermutter 3 an. Somit dichtet das Dichtelement 4 die Durchführungsöffnung 11 fluiddicht ab, z.B. gegen ein Austreten von Flüssigkeit aus dem Innenvolumen 10 bzw. gegen ein Eindringen von Flüssigkeit in das Innenvolumen 10. Das Dichtelement 4 wird insbesondere zwischen der Dichtfläche 3a der Ankermutter 3 und dem die Vertiefung 12 bildenden Bereich der Innenfläche 1i gequetscht bzw. zusammengedrückt. In Fig. 3 sind die Dichtpfade, die das Dichtelement 4 abdichtet, durch die Pfeile P1, P2 eingezeichnet.

Durch die Anordnung des Dichtelements 4 in der Vertiefung 12 auf der Seite der Innenfläche 1i des Gehäuseteils 1, wird der Platzbedarf des Dichtelements 4 im Innenvolumen 10 in Bezug auf die Längsachse L1 verringert. Somit kann der Führungsabschnitt 22 des Zugankers 2 in axialer Richtung relativ nahe an die Innenfläche 1i des Gehäuseteils 1 bzw. an den Abdeckungsabschnitt 14 heranreichen. Effektiv kann somit der Hub, also der Weg, den das Gleitlager 222 am Zuganker 2 zurücklegen kann, verlängert werden. Die Anordnung des Dichtelements 4 in der Vertiefung 12 auf der Seite der Innenfläche 1i des Gehäuseteils 1 bietet weiterhin den Vorteil, dass das Dichtelement 4 vor äußeren Einflüssen gut geschützt ist. Insbesondere kann die Hydraulikvorrichtung 210 entfernt werden, ohne dass das Dichtelement 4 beschädigt wird und/oder ein Austausch des Dichtelements 4 notwendig wird, wenn die Hydraulikvorrichtung 210 erneut angeflanscht wird oder eine neue Hydraulikvorrichtung 210 montiert wird.

Wie in den Fign. 1 und 3 beispielhaft gezeigt ist, kann die Ankermutter 3 derart relativ zum Zuganker 2 positioniert sein, dass die Dichtfläche 3a der Ankermutter 3 sich zumindest teilweise beabstandet zu einem dem Außenabschnitt 2B des Zugankers 2 zugewandten Ende des Außengewindes 20 erstreckt. Wie in Fig. 3 erkennbar, kann z.B. Innenbohrung 30 der Ankermutter 3 mit der daran vorgesehenen, in diesem Fall konischen Dichtfläche 3a über das Ende des Außengewindes 20 des Zugankers 2 hinausragen. Dadurch kann zuverlässig vermieden werden, dass das Dichtelement 4 durch das Außengewinde 20 beschädigt wird.

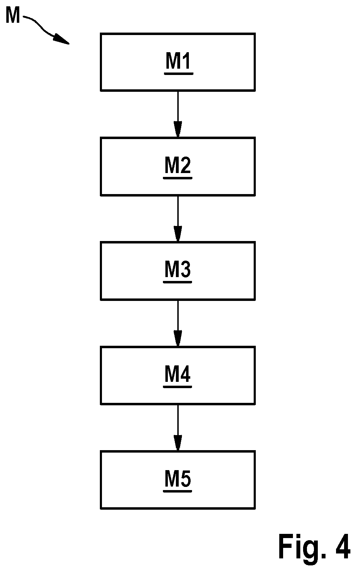

Fig. 4 zeigt schematisch den Ablauf eines Verfahrens M zur Herstellung einer Gehäusebaugruppe 100. Das Verfahren M wird nachfolgend beispielhaft unter Bezugnahme auf die oben beschriebene Gehäusebaugruppe 100 erläutert. Das Verfahren M umfasst ein Anordnen M1 des Dichtelements 4 in der Vertiefung 12 des Gehäuseteils 1 sowie einen Schritt M2, in welchem der Zuganker 2 durch die Durchführungsöffnung 11 des Gehäuseteils 1 durchgeführt wird, insbesondere derart, dass das Außengewinde 20 und der Führungsabschnitt 22 im Innenvolumen 10 des Gehäuseteils 1 positioniert sind. Die Schritte M1 und M2 können insbesondere derart durchgeführt werden, dass das Dichtelement 4 auf den Zuganker 2 aufgeschoben und durch das Durchführen des Zugankers 2 durch die Durchführungsöffnung 11 in der Vertiefung positioniert wird. Alternativ kann das Dichtelement 4 jedoch zunächst in der Vertiefung 12 positioniert und der Zuganker 2 anschließend in Schritt M2 durch das Dichtelement 4 hindurch geschoben werden.

In einem weiteren Schritt M3 erfolgt ein Verschrauben der Ankermutter 3 mit dem Zuganker 2, wie oben beschrieben. Das Verschrauben M2 kann vor oder nach dem Durchführen (Schritt M2) des Zugankers 2 durch die Durchführungsöffnung 11 erfolgen.

Ferner erfolgt noch ein Schritt M4 zum Kontaktieren des Dichtelements 4 mit der Dichtfläche 3a der Ankermutter 3, dem die Durchführungsöffnung 11 umgebenden Bereich der Innenfläche 1i und dem Innenabschnitt 2A des Zugankers 2. Der Schritt M4 kann zeitgleich mit der Ausführung der Schritt M1 bis M3 erfolgen. Beispielsweise kann die Kontaktierung des Dichtelements 4 mit dem Innenabschnitt 2Ades Zugankers 2 während des Schritts M2 erfolgen. Das Kontaktieren des Dichtelements 4 mit der Dichtfläche 3a der Ankermutter 3 und dem die Durchführungsöffnung 11 umgebenden Bereich der Innenfläche 1i kann z.B. durch das Verschrauben in Schritt M3 erfolgen.

Weiterhin optional kann ein zusätzlicher Schritt M5 vorgesehen sein, in welchem die Ankermutter 3 drehsicher am Zuganker fixiert wird, z.B. durch Crimpen.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Gehäusebaugruppe (100) für eine Hydraulikbaugruppe (200), aufweisend:
ein ein Innenvolumen (10) zumindest teilweise umgrenzendes Gehäuseteil (1) mit einer Durchführungsöffnung (11), welche sich zwischen einer dem Innenvolumen (10) zugewandten Innenfläche (1i) und einer entgegengesetzt zu dieser orientierten Außenfläche (1a) des Gehäuseteils (1) erstreckt, wobei ein die Durchführungsöffnung (11) umgebender Bereich der Innenfläche (1i) eine Vertiefung (12) ausbildet;
einen Zuganker (2), welcher sich mit einem Innenabschnitt (2A) in dem Innenvolumen (10) des Gehäuseteils (1) erstreckt und welcher durch die Durchführungsöffnung (11) hindurch ragt, so dass ein Außenabschnitt (2B) des Zugankers (2) über die Außenfläche (1a) des Gehäuseteils (1) vorsteht;
eine Ankermutter (3), welche mit dem Innenabschnitt (2A) des Zugankers (2) verschraubt ist und eine Dichtfläche (3a) aufweist; und
ein Dichtelement (4), welches in der Vertiefung (12) angeordnet ist und an dem Innenabschnitt (2A) des Zugankers (2), an dem die Durchführungsöffnung (11) umgebenden Bereich der Innenfläche (1i) sowie an der Dichtfläche (3a) der Ankermutter (3) anliegt.

2. Gehäusebaugruppe (100) nach Anspruch 1, wobei das Gehäuseteil (1) in dem die Durchführungsöffnung (11) umgebenden Bereich derart verformt ist, dass an der Innenfläche (1i) die Vertiefung (12) und an der Außenfläche (1a) eine entsprechende Erhöhung (13) ausgebildet ist.

3. Gehäusebaugruppe (100) nach Anspruch 1 oder 2, wobei die Vertiefung (12) eine Tiefe (t12) in einem Bereich zwischen 1 mm und 4 mm aufweist.

4. Gehäusebaugruppe (100) nach einem der voranstehenden Ansprüche, wobei die Ankermutter (3) eine Innenbohrung (30) mit einem Innengewinde (31) aufweist, welches mit einem am Innenabschnitt (2A) des Zugankers (2) ausgebildeten Außengewinde (20) verschraubt ist, wobei die Dichtfläche (3a) der Ankermutter (3) sich zumindest teilweise beabstandet zu einem dem Außenabschnitt (2B) des Zugankers (2) zugewandten Ende des Außengewindes (20) erstreckt.

5. Gehäusebaugruppe (100) nach Anspruch 4, wobei die Innenbohrung (30) in Richtung des Außenabschnitts (2B) des Zugankers (2) über das Ende des Außengewindes (20) hinausragt und die Dichtfläche (3a) der Ankermutter (3) an der Innenbohrung (30) der Ankermutter (3) ausgebildet ist.

6. Gehäusebaugruppe (100) nach Anspruch 5, wobei die Dichtfläche (3a) der Ankermutter (3) als Phase (32) an der Innenbohrung (30) der Ankermutter (3) ausgebildet ist.

7. Gehäusebaugruppe (100) nach einem der voranstehenden Ansprüche, wobei die Ankermutter (3) an dem Zuganker (2) drehgesichert ist, insbesondere durch eine Crimp-Verbindung.

8. Gehäusebaugruppe (100) nach einem der voranstehenden Ansprüche, wobei das Dichtelement (4) ringförmig, insbesondere als O-Ring ausgebildet ist.

9. Hydraulikbaugruppe (200), insbesondere für ein hydraulisches Bremssystem, aufweisend:
eine Gehäusebaugruppe (100) nach einem der voranstehenden Ansprüche; und
eine Hydraulikvorrichtung (210), insbesondere in Form einer Druckerzeugungseinrichtung, mit einem Flansch (212), an welchem eine Bohrung (214) ausgebildet ist;
wobei der Außenabschnitt (2B) des Zugankers (2) durch die Bohrung (214) des Flansches (212) hindurch ragt und die Hydraulikvorrichtung (210) über den Zuganker (2) an der Gehäusebaugruppe (100) befestigt ist.

10. Verfahren (M) zur Herstellung einer Gehäusebaugruppe (100) nach einem der Ansprüche 1 bis 8, umfassend:
Anordnen (M1) des Dichtelements (4) in der Vertiefung (12) des Gehäuseteils (1);
Durchführen (M2) des Zugankers (2) durch die Durchführungsöffnung (11) des Gehäuseteils (1);
Verschrauben (M3) der Ankermutter (3) mit dem Zuganker (2); und Kontaktieren (M4) des Dichtelements (4) mit der Dichtfläche (3a) der Ankermutter (3), dem die Durchführungsöffnung (11) umgebenden Bereich der Innenfläche (1i) und dem Innenabschnitt (2A) des Zugankers (2).

## Claims

1. Housing assembly (100) for a hydraulic assembly (200), having:
a housing part (1), which at least partially delimits an internal volume (10) and has a feed-through opening (11) extending between an inner surface (1i) facing the internal volume (10) and an outer surface (1a) of the housing part (1) oriented in an opposite direction thereto, wherein a region of the inner surface (1i) surrounding the feed-through opening (11) forms a recess (12); a tie rod (2), which extends with an inner portion (2A) in the internal volume (10) of the housing part (1) and which projects through the feed-through opening (11) so that an outer portion (2B) of the tie rod (2) protrudes beyond the outer surface (1a) of the housing part (1);
an anchor nut (3), which is screwed onto the inner portion (2A) of the tie rod (2) and has a sealing surface (3a); and
a sealing element (4), which is arranged in the recess (12) and bears on the inner portion (2A) of the tie rod (2), on the region of the inner surface (1i) surrounding the feed-through opening (11), and on the sealing surface (3a) of the anchor nut (3).

2. Housing assembly (100) according to Claim 1, wherein the housing part (1), in the region surrounding the feed-through opening (11), is deformed in such a way that the recess (12) is formed on the inner surface (1i) and a corresponding elevation (13) is formed on the outer surface (1a).

3. Housing assembly (100) according to Claim 1 or 2, wherein the recess (12) has a depth (t12) in a range between 1 mm and 4 mm.

4. Housing assembly (100) according to any one of the preceding claims,
wherein the anchor nut (3) has an inner bore (30) with an inner thread (31) which is screwed onto an outer thread (20) formed on the inner portion (2A) of the tie rod (2), wherein the sealing surface (3a) of the anchor nut (3) extends at least partially spaced apart from an end of the outer thread (20) facing the outer portion (2B) of the tie rod (2).

5. Housing assembly (100) according to Claim 4, wherein the inner bore (30) protrudes in the direction of the outer portion (2B) of the tie rod (2) beyond the end of the outer thread (20), and the sealing surface (3a) of the anchor nut (3) is formed on the inner bore (30) of the anchor nut (3).

6. Housing assembly (100) according to Claim 5, wherein the sealing surface (3a) of the anchor nut (3) is formed as a chamfer (32) on the inner bore (30) of the anchor nut (3).

7. Housing assembly (100) according to any one of the preceding claims,
wherein the anchor nut (3) is rotationally secured on the tie rod (2), in particular by a crimp connection.

8. Housing assembly (100) according to any one of the preceding claims,
wherein the sealing element (4) is annular, in particular formed as an O-ring.

9. Hydraulic assembly (200), in particular for a hydraulic brake system, having:
a housing assembly (100) according to any one of the preceding claims; and
a hydraulic device (210), in particular in the form of a pressure generator, having a flange (212) on which a bore (214) is formed;
wherein the outer portion (2B) of the tie rod (2) extends through the bore (214) of the flange (212), and the hydraulic device (210) is fastened to the housing assembly (100) via the tie rod (2).

10. Method (M) for producing a housing assembly (100) according to any one of Claims 1 to 8, comprising:
arranging (M1) the sealing element (4) in the recess (12) of the housing part (1);
feeding (M2) the tie rod (2) through the feed-through opening (11) of the housing part (1);
screwing (M3) the anchor nut (3) onto the tie rod (2); and contacting (M4) the sealing element (4) with the sealing surface (3a) of the anchor nut (3), with the region of the inner surface (1i) surrounding the feed-through opening (11), and with the inner portion (2A) of the tie rod (2).

## Revendications

1. Ensemble carter (100) pour un ensemble hydraulique (200), comportant :
une partie (1) de carter délimitant au moins en partie un volume intérieur (10) avec une ouverture de passage (11), qui s'étend entre une surface intérieure (1i) tournée vers le volume intérieur (10) et une surface extérieure (1a) de la partie (1) de carter opposée à celle-ci, une zone de la surface intérieure (1i) entourant l'ouverture de passage (11) formant un creux (12) ; un tirant (2) qui s'étend avec une section intérieure (2A) dans le volume intérieur (10) de la partie (1) de carter et qui fait saillie à travers l'ouverture de passage (11), de telle sorte qu'une section extérieure (2B) du tirant (2) fait saillie au-delà de la surface extérieure (1a) de la partie (1) de carter ;
un écrou d'ancrage (3), qui est vissé à la section intérieure (2A) du tirant (2) et qui comporte une surface d'étanchéité (3a) ; et
un élément d'étanchéité (4), qui est disposé dans le creux (12) et repose sur la section intérieure (2A) du tirant (2), sur la zone de la surface intérieure (1i) entourant l'ouverture de passage (11) ainsi que sur la surface d'étanchéité (3a) de l'écrou d'ancrage (3).

2. Ensemble carter (100) selon la revendication 1, la partie (1) de carter étant déformée dans la zone entourant l'ouverture de passage (11) de telle manière que le creux (12) est formé sur la surface intérieure (1i) et une partie surélevée (13) correspondante est formée sur la surface extérieure (1a).

3. Ensemble carter (100) selon la revendication 1 ou 2, le creux (12) présentant une profondeur (t12) dans une plage entre 1 mm et 4 mm.

4. Ensemble carter (100) selon l'une des revendications précédentes, l'écrou d'ancrage (3) comportant un alésage intérieur (30) avec un filetage intérieur (31), qui est vissé à un filetage extérieur (20) formé sur la section intérieure (2A) du tirant (2), la surface d'étanchéité (3a) de l'écrou d'ancrage (3) s'étendant au moins en partie à une certaine distance d'une extrémité du filetage extérieur (20) tournée vers la section extérieure (2B) du tirant (2).

5. Ensemble carter (100) selon la revendication 4, l'alésage intérieur (30) faisant saillie au-delà de l'extrémité du filetage extérieur (20) en direction de la section extérieure (2B) du tirant (2), et la surface d'étanchéité (3a) de l'écrou d'ancrage (3) étant formée sur l'alésage intérieur (30) de l'écrou d'ancrage (3).

6. Ensemble carter (100) selon la revendication 5, la surface d'étanchéité (3a) de l'écrou d'ancrage (3) étant formée comme une phase (32) sur l'alésage intérieur (30) de l'écrou d'ancrage (3).

7. Ensemble carter (100) selon l'une des revendications précédentes, l'écrou d'ancrage (3) étant bloqué en rotation sur le tirant (2), en particulier par une liaison de sertissage.

8. Ensemble carter (100) selon l'une des revendications précédentes, l'élément d'étanchéité (4) étant de forme annulaire, en particulier étant réalisé sous la forme d'un joint torique.

9. Ensemble hydraulique (200), en particulier pour un système de freinage hydraulique, comportant :
un ensemble carter (100) selon l'une des revendications précédentes ; et
un dispositif hydraulique (210), en particulier sous la forme d'un dispositif producteur de pression, avec une bride (212), sur laquelle est formé un alésage (214) ;
la section extérieure (2B) du tirant (2) faisant saillie à travers l'alésage (214) de la bride (212) et le dispositif hydraulique (210) étant fixé sur l'ensemble carter (100) par le tirant (2).

10. Procédé (M) de fabrication d'un ensemble carter (100) selon l'une des revendications 1 à 8, comprenant :
disposition (M1) de l'élément d'étanchéité (4) dans le creux (12) de la partie (1) de carter ;
passage (M2) du tirant (2) à travers l'ouverture de passage (11) de la partie (1) carter ;
vissage (M3) de l'écrou d'ancrage (3) au tirant (2) ; et mise en contact (M4) de l'élément d'étanchéité (4) avec la surface d'étanchéité (3a) de l'écrou d'ancrage (3), la zone de la surface intérieure (1i) entourant l'ouverture de passage (11) et la section intérieure (2A) du tirant (2).
